# EUROPEAN PATENT APPLICATION

(11) **EP 4 815 126 A1**
(43) Date of publication of application: **30.09.2026**
(21) Application number: 24895361.4
(22) Date of filing: 28.03.2024
(51) Int. Cl.: H01M 50/107

(54) **BATTERY CELL, BATTERY, AND ELECTRIC DEVICE**

(30) Priority: 29.11.2023 CN 202323249549 U
(71) Applicant: Contemporary Amperex Technology Co., Limited, Ningde, Fujian 352100 (CN)
(72) Inventor: NIU, Di, Ningde, Fujian 352100 (CN); BAI, Qinglin, Ningde, Fujian 352100 (CN); ZHANG, Zheng, Ningde, Fujian 352100 (CN); MENG, Hao, Ningde, Fujian 352100 (CN); GAO, Jiajing, Ningde, Fujian 352100 (CN)
(74) Representative: Ziebig Hengelhaupt Intellectual Property Attorneys Patentanwaltskanzlei PartGmbB
(86) International application number: PCT/CN2024/084361
(87) International publication number: WO 2025/112249

(57) **Abstract**

The present application provides a battery cell, a battery, and an electric apparatus. The battery cell includes a housing and a first protective layer, the housing includes a shell and an end cap, the shell has an opening, the end cap covers the opening, and the end cap is welded to the shell to form a first welded portion. The first protective layer covers a surface of the first welded portion.

## Description

### CROSS-REFERENCE TO RELATED APPLICATIONS

The present application claims priority to Chinese Patent Application No. 202323249549.8, filed on November 29, 2023, entitled "BATTERY CELL, BATTERY, AND ELECTRIC APPARATUS", the entire content of which is incorporated herein by reference.

### TECHNICAL FIELD

The present application relates to the field of battery technology, and more particularly, to a battery cell, a battery, and an electric apparatus.

### BACKGROUND

With the development of new energy technology, batteries are increasingly widely used, for example, in mobile phones, laptops, electric scooters, electric vehicles, electric aircraft, electric ships, electric toy cars, electric toy ships, electric toy aircraft, and electric tools.

In a battery cell, the housing, as an important component of the battery cell, is critical to the stable and reliable operation of the battery cell, and the reliability of the housing directly affects the quality of the battery cell. Therefore, the reliability of the housing is a key research focus in battery technology.

### SUMMARY

In view of the above issues, the present application provides a battery cell, a battery, and an electric apparatus capable of effectively improving the reliability of the battery cell.

According to a first aspect, an embodiment of the present application provides a battery cell, where the battery cell includes a housing and a first protective layer, the housing includes a shell and an end cap, the shell has an opening, the end cap covers the opening, and the end cap is welded to the shell to form a first welded portion. The first protective layer covers a surface of the first welded portion.

The above technical solution, by providing the first protective layer, with the first protective layer covering the surface of the first welded portion, reduces the risk of corrosion or damage to the first welded portion, thereby effectively improving the reliability of the battery cell.

In some embodiments of the first aspect, the first protective layer includes a first connecting section, a main section, and a second connecting section connected to each other, the main section being located between the first connecting section and the second connecting section. The first connecting section is connected to the shell, the second connecting section is connected to the end cap, and the main section covers the surface of the first welded portion.

This can further improve the coverage effect of the first protective layer on the first welded portion, reducing the risk of coverage blind spots. The first connecting portion and the second connecting portion can also enhance the connection strength of the first protective layer, reducing the risk of detachment of the first protective layer.

In some embodiments of the first aspect, the battery cell further includes an electrode assembly, the electrode assembly being accommodated in the housing. The shell includes a sidewall surrounding the electrode assembly, the first connecting section is connected to a side of the sidewall facing away from the electrode assembly, and the second connecting section is connected to a side of the end cap facing away from the electrode assembly.

The above technical solution, by welding the end cap to the shell and providing the first protective layer on the exterior of the housing, is convenient to operate and has low difficulty, which is conducive to reducing costs.

In some embodiments of the first aspect, the battery cell further includes an insulating member, the insulating member being connected to the side of the sidewall facing away from the electrode assembly.

The insulating member can provide insulation for the housing, reducing the risk of a short circuit between the battery cell and external electrical connection components, thereby improving the reliability of the battery cell.

In some embodiments of the first aspect, the first connecting section is spaced apart from the insulating member, resulting in a simple structural design and low manufacturing difficulty, which is conducive to reducing costs and improving product yield.

In some embodiments of the first aspect, a side edge of the first connecting section, along an extension direction thereof away from the main section, is connected to the insulating member.

Both the first connecting section and the insulating member provide a protective effect on the shell, improving the reliability of the shell. This can effectively improve the consistency of the outer surface of the housing, thereby facilitating an improvement in the aesthetic appearance of the battery cell.

In some embodiments of the first aspect, along a thickness direction of the sidewall, a side surface of the first connecting section facing away from the sidewall is flush with a side surface of the insulating member facing away from the sidewall. This can effectively improve the flatness of the outer surface of the housing, thereby further enhancing the aesthetic appearance of the battery cell.

In some embodiments of the first aspect, along the thickness direction of the sidewall, the first connecting section at least partially overlaps with the insulating member.

The above technical solution can further improve the coverage effect of the first connecting section and the insulating member on the sidewall, reducing the risk of coverage blind spots, thereby further enhancing the protective effect of the first connecting section and the insulating member on the shell, which is conducive to improving the reliability of the shell.

In some embodiments of the first aspect, the first protective layer and the insulating member are an integrally formed structure.

There is no need to connect the first protective layer and the insulating member through an additional connection process, simplifying the manufacturing process. Meanwhile, compared to connecting the first protective layer and the insulating member through an additional connection process, the integrally formed first protective layer and insulating member have higher connection strength.

In some embodiments of the first aspect, the sidewall is provided with a recess, the recess being recessed relative to an outer surface of the sidewall, a bottom wall of the recess is welded to the end cap to form the first welded portion, and at least a portion of the first connecting section is accommodated in the recess.

The above technical solution can reduce the size of the first welded portion and the first connecting section protruding from the housing, thereby reducing the overall volume of the battery cell, which is conducive to increasing the energy density of the battery cell.

In some embodiments of the first aspect, along the thickness direction of the sidewall, a side surface of the first connecting section facing away from the electrode assembly is flush with a side surface of the sidewall facing away from the electrode assembly. This can improve the flatness of the outer surface of the sidewall, optimizing the appearance of the product.

In some embodiments of the first aspect, along a thickness direction of the end cap, a side surface of the second connecting section facing away from the electrode assembly is flush with a side surface of the end cap facing away from the electrode assembly. This can improve the flatness of the outer surface of the end cap, thereby further optimizing the appearance of the product.

In some embodiments of the first aspect, a minimum distance L1 between the side edge of the first connecting section, along the extension direction thereof away from the main section, and the first welded portion satisfies a relationship: L1 ≥ 0.05 mm. A minimum distance L2 between a side edge of the second connecting section, along an extension direction thereof away from the main section, and the first welded portion satisfies a relationship: L2 ≥ 0.05 mm.

The above technical solution, by setting the minimum distance L1 between the side edge of the first connecting section along an extension direction thereof away from the main section and the first welded portion, and the minimum distance L2 between the side edge of the second connecting section along an extension direction thereof away from the main section and the first welded portion within the above ranges, can further improve the coverage effect of the first protective layer on the first welded portion, reducing the risk of coverage blind spots, thereby further improving the reliability of the battery cell.

In some embodiments of the first aspect, the minimum distance L1 satisfies a relationship: L1 ≥ 0.1 mm, and the minimum distance L2 satisfies a relationship: L2 ≥ 0.1 mm, to further reduce the risk of coverage blind spots.

In some embodiments of the first aspect, the housing is provided with a coating, the coating surrounds the first welded portion, and the first protective layer is connected to the coating.

The above technical solution, by providing a coating on the housing, enables the coating to protect the surface of the housing, thereby further improving the overall reliability of the housing.

In some embodiments of the first aspect, a thickness d1 of the coating satisfies a relationship: 0.1 µm ≤ d1 ≤ 10 µm. By setting the thickness d1 of the coating within the above range, it is possible to improve the overall reliability of the housing while minimizing the impact of the coating on the overall size of the battery cell.

In some embodiments of the first aspect, the thickness d1 of the coating satisfies a relationship: 0.5 µm ≤ d1 ≤ 5 µm, to further balance the overall reliability of the housing and the overall size of the battery cell.

In some embodiments of the first aspect, the first welded portion includes a transition surface, the transition surface connecting an outer surface of the shell and an outer surface of the end cap.

By providing the transition surface, a smooth transition can be achieved between the surface of the first welded portion and the outer surface of the shell, as well as between the surface of the first welded portion and the outer surface of the end cap. This can reduce the difficulty of applying the first protective layer and improve the overall flatness of the outer appearance of the battery cell, which is conducive to improving the quality of the battery cell.

In some embodiments of the first aspect, the transition surface is an arcuate surface.

The above technical solution, by setting the surface of the first welded portion as an arcuate surface, can reduce the difficulty of welding the end cap to the shell while also reducing the difficulty of preparing the first protective layer, effectively improving product yield.

In some embodiments of the first aspect, an arc radius R of the arcuate surface satisfies a relationship: R ≥ 100 µm.

The above technical solution, by setting the arc radius R of the arcuate surface to satisfy the above relationship, can further reduce the difficulty of preparing the first protective layer and improve product yield.

In some embodiments of the first aspect, the arc radius R satisfies a relationship: R ≥ 200 µm.

In some embodiments of the first aspect, a thickness d2 of the first protective layer satisfies a relationship: d2 ≥ 5 µm. By setting the thickness d2 of the first protective layer to satisfy the above relationship, the protective effect of the first protective layer on the first welded portion can be further improved.

In some embodiments of the first aspect, the thickness d2 of the first protective layer satisfies a relationship: d2 ≥ 10 µm.

In some embodiments of the first aspect, the first protective layer is a transparent structure, which can further optimize the appearance of the product.

In some embodiments of the first aspect, the first protective layer includes a fluorescent component, which can further improve the accuracy of detecting the thickness of the first protective layer.

In some embodiments of the first aspect, the first protective layer includes a coating material, the coating material including polyacrylate, polyurethane, or epoxy resin.

The above technical solution, by using a coating material applied through a coating process to form the first protective layer on the first welded portion, is simple in process, which is conducive to reducing the difficulty of preparing the first protective layer and lowering costs.

In some embodiments of the first aspect, a viscosity η of the coating material satisfies a relationship: 1 cps ≤ η ≤ 2000 cps. By setting the viscosity η of the coating material within the above range, the coating quality can be effectively improved, enhancing product yield.

In some embodiments of the first aspect, the viscosity η of the coating material satisfies a relationship: 1 cps ≤ η ≤ 1000 cps, to further improve coating quality and product yield.

In some embodiments of the first aspect, an adhesion between the first protective layer and the first welded portion ranges from level 0 to level 1.

By setting the adhesion between the first protective layer and the first welded portion to satisfy the above relationship, the reliability of the connection between the first protective layer and the first welded portion can be further improved, reducing the risk of detachment of the first protective layer.

In some embodiments of the first aspect, the end cap is further provided with a second welded portion, the second welded portion being electrically connected to the electrode assembly of the battery cell. The battery cell further includes a second protective layer, the second protective layer covering a surface of the second welded portion.

The above technical solution can isolate the second welded portion from the external environment, thereby blocking moisture and reducing the risk of corrosion of the second welded portion. Additionally, the second protective layer itself has a certain hardness, which can reduce the risk of scratches or impacts on the second welded portion, thereby further improving the reliability of the battery cell.

In some embodiments of the first aspect, the first protective layer and the second protective layer are an integrally formed structure.

There is no need to connect the first protective layer and the second protective layer through an additional connection process, simplifying the manufacturing process. Meanwhile, compared to connecting the first protective layer and the second protective layer through an additional connection process, the integrally formed first protective layer and second protective layer have higher connection strength.

In some embodiments of the first aspect, the battery cell is a cylindrical battery cell.

According to a second aspect, the present application provides a battery including the battery cell provided in any embodiment of the first aspect.

According to a third aspect, the present application provides an electric apparatus including the battery cell provided in any embodiment of the first aspect, the battery cell being configured to provide electrical energy.

The above description is only an overview of the technical solutions of the present application. To provide a clearer understanding of the technical means of the present application, the solutions may be implemented in accordance with the content of the specification, and to make the above and other objectives, features, and advantages of the present application more apparent and understandable, specific embodiments of the present application are provided below.

### BRIEF DESCRIPTION OF DRAWINGS

By reading the detailed description of the preferred embodiments below, various other advantages and benefits will become apparent to those skilled in the art. The drawings are provided solely for the purpose of illustrating the preferred embodiments and are not to be considered a limitation of the present application. Moreover, throughout the drawings, the same reference numerals denote the same components. In the drawings:
FIG. 1 is a schematic structural diagram of a vehicle provided by some embodiments of the present application;
FIG. 2 is a schematic structural exploded view of a battery provided by some embodiments of the present application;
FIG. 3 is a schematic sectional structural diagram of a battery cell provided by some embodiments of the present application;
FIG. 4 is a schematic sectional structural diagram of a housing of a battery cell provided by some embodiments of the present application;
FIG. 5 is a schematic enlarged structural diagram of portion A in FIG. 3;
FIG. 6 is a schematic sectional structural diagram of another battery cell provided by some embodiments of the present application;
FIG. 7 is a schematic enlarged structural diagram of portion B in FIG. 6;
FIG. 8 is a schematic sectional structural diagram of still another battery cell provided by some embodiments of the present application;
FIG. 9 is a schematic enlarged structural diagram of portion C in FIG. 8;
FIG. 10 is a schematic sectional structural diagram of yet still another battery cell provided by some embodiments of the present application;
FIG. 11 is a schematic enlarged structural diagram of portion D in FIG. 10;
FIG. 12 is a schematic sectional structural diagram of a further battery cell provided by some embodiments of the present application; and
FIG. 13 is a schematic enlarged structural diagram of portion E in FIG. 12.

Reference numerals in the detailed embodiments are as follows:
1. vehicle; 2. battery; 3. controller; 4. motor; 5. box; 7. battery cell;
10. housing; 11. shell; 111. opening; 112. sidewall; 1121. recess; 12. end cap; 121. second welded portion; 13. first welded portion; 131. transition surface; 14. coating; 20. first protective layer; 21. first connecting section; 22. main section; 23. second connecting section; 30. electrode assembly; 40. insulating member; 50. second protective layer; and 60. current collector.

### DESCRIPTION OF EMBODIMENTS

To make the objectives, technical solutions, and advantages of the embodiments of the present application clearer, the technical solutions in the embodiments of the present application will be described clearly and completely below with reference to the accompanying drawings in the embodiments of the present application. Obviously, the described embodiments are some, but not all, embodiments of the present application. Based on the embodiments in the present application, all other embodiments obtained by those of ordinary skill in the art without creative efforts fall within the scope of protection of the present application.

Unless otherwise defined, all technical and scientific terms used in the present application have the same meaning as commonly understood by those skilled in the technical field of the present application; the terms used in the specification of the present application are for the purpose of describing specific embodiments only and are not intended to limit the present application; and the terms "include" and "have" and any variations thereof in the specification, claims, and the above description of the drawings of the present application are intended to cover non-exclusive inclusion. The terms "first", "second", and the like in the specification and claims or the above drawings of the present application are used to distinguish different objects and are not used to describe a specific order or primary-secondary relationship.

Reference to "embodiment" in the present application means that a specific feature, structure, or characteristic described in connection with the embodiment may be included in at least one embodiment of the present application. The appearance of the phrase in various places in the specification does not necessarily refer to the same embodiment, nor is it a separate or alternative embodiment mutually exclusive with other embodiments.

In the description of the present application, it should be noted that, unless otherwise explicitly specified and limited, the terms "mount", "connect", "join", and "attach" should be understood in a broad sense. For example, it may be a fixed connection, a detachable connection, or an integral connection; it may be a direct connection, an indirect connection through an intermediary, or an internal communication between two elements. For those of ordinary skill in the art, the specific meanings of the above terms in the present application can be understood according to specific circumstances.

The term "and/or" in the present application is merely an associative relationship describing associated objects, indicating that three relationships may exist. For example, A and/or B may indicate: A exists alone, A and B exist simultaneously, and B exists alone. Additionally, the character "/" in the present application generally indicates an "or" relationship between the associated objects before and after.

In the embodiments of the present application, the same reference numerals denote the same components, and for brevity, detailed descriptions of the same components are omitted in different embodiments. It should be understood that the dimensions such as thickness, length, and width of various components in the embodiments of the present application shown in the drawings, as well as the overall thickness, length, and width of integrated apparatus, are merely illustrative and should not constitute any limitation to the present application.

The term "a plurality of" appearing in the present application refers to two or more (including two).

The term "parallel" in the present application includes not only the case of absolute parallelism but also the case of approximate parallelism as conventionally recognized in engineering; similarly, "perpendicular" includes not only the case of absolute perpendicularity but also the case of approximate perpendicularity as conventionally recognized in engineering.

In the present application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, which is not limited by the embodiments of the present application. The battery cell may be in the form of a cylinder, a flat body, a rectangular parallelepiped, or other shapes, which is also not limited by the embodiments of the present application.

The battery mentioned in the embodiments of the present application may include one or more battery cells to provide a single physical module with higher voltage and capacity. When there are a plurality of battery cells, the plurality of battery cells are connected in series, parallel, or a combination thereof via busbar components.

In some embodiments, the battery may be a battery module. When there are a plurality of battery cells, the plurality of battery cells are arranged and fixed to form a battery module.

In some embodiments, the battery may be a battery pack, the battery pack including a box and battery cells, the battery cells or battery modules being accommodated in the box.

In some embodiments, the box may be part of the chassis structure of a vehicle. For example, a portion of the box may form at least a part of the floor of the vehicle, or a portion of the box may form at least a part of the crossbeams and longitudinal beams of the vehicle.

In some embodiments, the battery may be an energy storage apparatus. Energy storage apparatuses include energy storage containers, energy storage cabinets, and the like.

A battery cell generally includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is disposed between the positive electrode and the negative electrode, which can prevent short circuits between the positive and negative electrodes while allowing active ions to pass through.

In some embodiments, the positive electrode may be a positive electrode plate, the positive electrode plate may include a positive electrode current collector and a positive electrode active material disposed on at least one surface of the positive electrode current collector.

For example, the positive electrode current collector has two opposing surfaces in a thickness direction thereof, and the positive electrode active material is disposed on either or both of the two opposing surfaces of the positive electrode current collector.

For example, the positive electrode current collector may employ a metal foil or a composite current collector. For instance, as a metal foil, silver-surface-treated stainless steel, copper, aluminum, nickel, carbon electrode, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, polypropylene, polyethylene terephthalate, polybutylene terephthalate, polystyrene, or polyethylene).

For example, the positive electrode active material may include at least one of the following materials: lithium-containing phosphates, lithium transition metal oxides, and their respective modified compounds. However, the present application is not limited to these materials, and other conventional materials that can be used as positive electrode active materials for batteries may also be used. These positive electrode active materials may be used alone or in combination of two or more.

In some embodiments, the positive electrode may employ foam carbon or foam metal. The foam metal may be foam nickel, foam copper, foam aluminum, or foam alloy, or the like. When foam metal is used as the positive electrode, the surface of the foam metal may not be provided with a positive electrode active material, or it may be provided with a positive electrode active material. For example, lithium source material, potassium metal, or sodium metal may also be filled and/or deposited within the foam metal, the lithium source material being lithium metal and/or lithium-rich material.

In some embodiments, the negative electrode may be a negative electrode plate, and the negative electrode plate may include a negative electrode current collector.

For example, the negative electrode current collector may employ a metal foil or a composite current collector. For instance, as a metal foil, silver-surface-treated stainless steel, copper, aluminum, nickel, carbon electrode, carbon, nickel, or titanium may be used. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, polypropylene, polyethylene terephthalate, polybutylene terephthalate, polystyrene, or polyethylene).

For example, the negative electrode plate may include a negative electrode current collector and a negative electrode active material disposed on at least one surface of the negative electrode current collector.

For example, the negative electrode current collector has two opposing surfaces in a thickness direction thereof, and the negative electrode active material is disposed on either or both of the two opposing surfaces of the negative electrode current collector.

For example, the negative electrode active material may employ negative electrode active materials known in the art for battery cells. For example, the negative electrode active material may include at least one of the following materials: artificial graphite, natural graphite, soft carbon, hard carbon, silicon-based materials, tin-based materials, and lithium titanate.

In some embodiments, the negative electrode may employ foam carbon or foam metal. The foam metal may be foam nickel, foam copper, foam aluminum, foam alloy, or the like. When foam metal is used as the negative electrode plate, the surface of the foam metal may not be provided with a negative electrode active material, or it may be provided with a negative electrode active material.

For example, lithium source material, potassium metal, or sodium metal may also be filled and/or deposited within the negative electrode current collector, the lithium source material being lithium metal and/or lithium-rich material.

In some embodiments, the material of the positive electrode current collector may be aluminum, and the material of the negative electrode current collector may be copper.

In some embodiments, the electrode assembly further includes a separator, the separator being disposed between the positive electrode and the negative electrode.

In some embodiments, the separator is a separating film. The separating film may be any well-known separating film having a porous structure with good chemical and mechanical stability.

For example, the main material of the separating film may be selected from at least one of glass fiber, non-woven fabric, polyethylene, polypropylene, polyvinylidene fluoride, and ceramics.

In some embodiments, the separator is a solid-state electrolyte. The solid-state electrolyte is disposed between the positive electrode and the negative electrode, simultaneously conducting ions and isolating the positive and negative electrodes.

In some embodiments, the battery cell further includes an electrolyte, the electrolyte conducting ions between the positive and negative electrodes. The electrolyte may be liquid, gel, or solid.

In some embodiments, the electrode assembly is a wound structure. The positive electrode plate and the negative electrode plate are wound into a wound structure.

In some embodiments, the electrode assembly is a laminated structure.

For example, a plurality of positive electrode plates and a plurality of negative electrode plates may be provided, respectively, with the plurality of positive electrode plates and the plurality of negative electrode plates alternately stacked.

For example, a plurality of positive electrode plates may be provided, and the negative electrode plate may be folded to form a plurality of stacked folding sections, with a positive electrode plate sandwiched between adjacent folding sections.

For example, both the positive electrode plate and the negative electrode plate may be folded to form a plurality of stacked folding sections.

For example, a plurality of separators may be provided, respectively disposed between any adjacent positive electrode plate or negative electrode plate.

For example, the separator may be continuously disposed, arranged between any adjacent positive electrode plate or negative electrode plate by folding or winding.

In some embodiments, the shape of the electrode assembly may be cylindrical, flat, prismatic, or the like.

In some embodiments, the electrode assembly is provided with tabs, the tabs being capable of conducting current from the electrode assembly. The tabs include a positive tab and a negative tab.

With the development of new energy technology, batteries are increasingly widely used, for example, in mobile phones, laptops, electric scooters, electric vehicles, electric aircraft, electric ships, electric toy cars, electric toy ships, electric toy aircraft, and electric tools.

In a battery cell, the housing, as an important component of the battery cell, is critical to the stable and reliable operation of the battery cell, and the reliability of the housing directly affects the quality of the battery cell. Currently, it is common to weld the shell and the end cap to form the housing, but the reliability of the welded area between the shell and the end cap is relatively weak. During transportation, storage, and use of the battery cell, the welded area is prone to corrosion or damage, thereby affecting the reliability of the battery cell.

Based on the above considerations, in the present application, a battery cell is designed, where the battery cell includes a housing and a first protective layer, the housing includes a shell and an end cap, the shell has an opening, the end cap covers the opening, the end cap is welded to the shell to form a first welded portion, and the first protective layer covers a surface of the first welded portion. Thus, the first protective layer can protect the first welded portion, reducing the risk of corrosion or damage to the first welded portion, thereby effectively improving the reliability of the battery cell.

The technical solutions described in the embodiments of the present application are applicable to batteries and electric apparatuses using batteries.

The electric apparatus may be, but is not limited to, vehicles, mobile phones, portable devices, laptops, ships, spacecraft, electric toys, or electric tools. Vehicles may be, but are not limited to, fuel vehicles, gas vehicles, or new energy vehicles, and new energy vehicles may be, but are not limited to, pure electric vehicles, hybrid electric vehicles, or extended-range vehicles; spacecraft include, but are not limited to, airplanes, rockets, space shuttles, or spaceships; electric toys include, but are not limited to, fixed or mobile electric toys, such as game consoles, electric car toys, electric ship toys, or electric airplane toys; and electric tools include, but are not limited to, metal cutting electric tools, grinding electric tools, assembly electric tools, or railway electric tools, such as electric drills, electric grinders, electric wrenches, electric screwdrivers, electric hammers, impact drills, concrete vibrators, or electric planers.

It should be understood that the technical solutions described in the embodiments of the present application are not limited to the batteries and electric devices described above but can be applied to all batteries including battery boxes and electric devices using batteries. However, for brevity of description, the following embodiments are described with electric vehicles as an example.

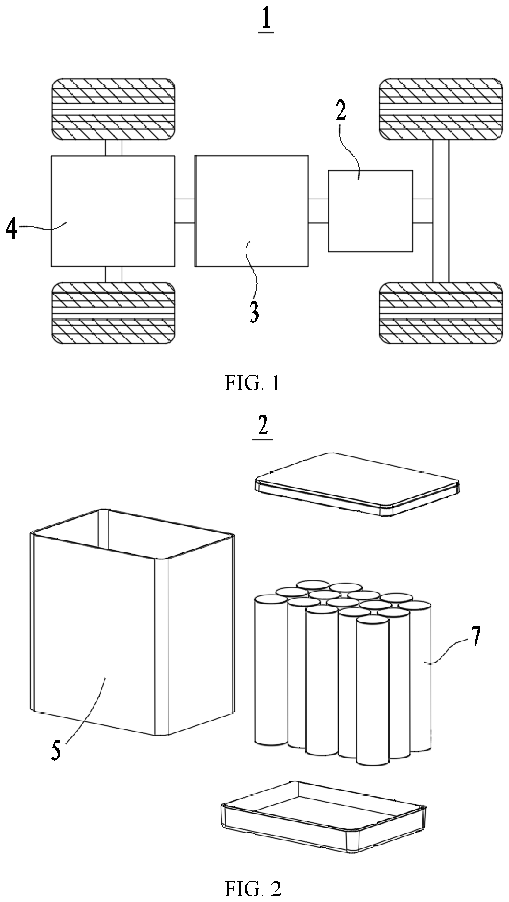

FIG. 1 is a schematic structural diagram of a vehicle provided by some embodiments of the present application.

Still referring to FIG. 1, the interior of the vehicle 1 is provided with a battery 2, the battery 2 may be disposed at the bottom, head, or tail of the vehicle 1. The battery 2 may be used to supply power to the vehicle 1. For example, the battery 2 may serve as an operational power source for the vehicle 1.

The vehicle 1 may further include a controller 3 and a motor 4, the controller 3 being configured to control the battery 2 to supply power to the motor 4, for example, for the operational power requirements during starting, navigation, and driving of the vehicle 1.

In some embodiments of the present application, the battery 2 may not only serve as an operational power source for the vehicle 1 but also as a driving power source for the vehicle 1, replacing or partially replacing fuel or natural gas to provide driving power for the vehicle 1.

FIG. 2 is a schematic exploded view of a battery provided by some embodiments of the present application.

Still referring to FIG. 2, the battery 2 includes a box 5 and a battery cell 7, the battery cell 7 being accommodated in the box 5.

The box 5 is used to accommodate the battery cell, and the box 5 may have various structures, such as a cylinder or a rectangular parallelepiped.

In the battery 2, there may be one or more battery cells 7. If there are a plurality of battery cells 7, the plurality of battery cells 7 may be connected in series, parallel, or a combination thereof, where a combination refers to a mix of series and parallel connections among the plurality of battery cells 7. The plurality of battery cells 7 may be directly connected in series, parallel, or a combination thereof, and the entirety formed by the plurality of battery cells 7 is accommodated in the box 5. Certainly, the plurality of battery cells 7 may first be connected in series, parallel, or a combination thereof to form a battery module, and a plurality of battery modules are then connected in series, parallel, or a combination thereof to form an entirety, which is accommodated in the box 5.

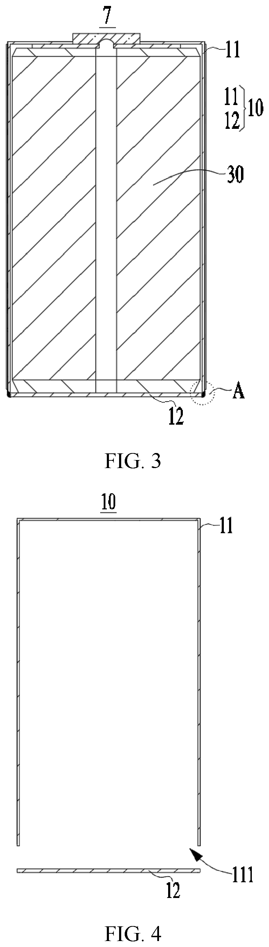

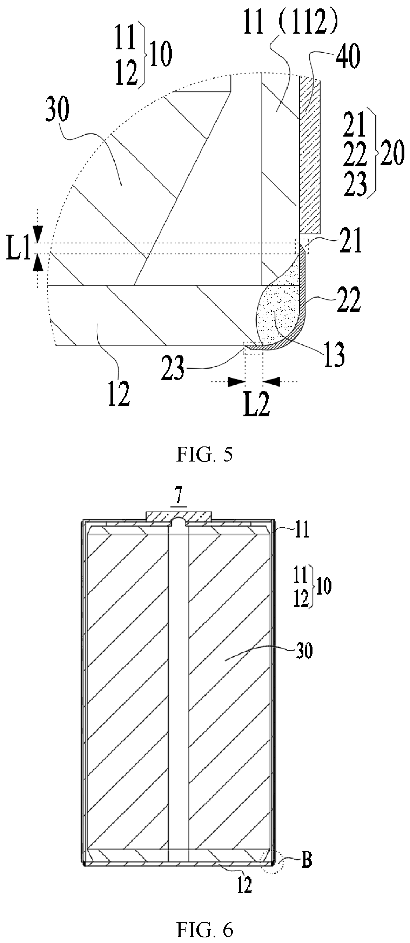

FIG. 3 is a schematic sectional structural diagram of a battery cell provided by some embodiments of the present application, FIG. 4 is a schematic sectional structural diagram of a housing of a battery cell provided by some embodiments of the present application, and FIG. 5 is a schematic enlarged structural diagram of portion A in FIG. 3.

Still referring to FIG. 3 to FIG. 5, an embodiment of the present application provides a battery cell 7, where the battery cell 7 includes a housing 10 and a first protective layer 20, the housing 10 includes a shell 11 and an end cap 12, the shell 11 has an opening 111, the end cap 12 covers the opening 111, the end cap 12 is welded to the shell 11 to form a first welded portion 13, and the first protective layer 20 covers a surface of the first welded portion 13.

The shell 11 is a component used to cooperate with the end cap 12 to form an internal environment of the battery cell 7, where the formed internal environment can be used to accommodate an electrode assembly 30, an electrolyte, and other components.

Optionally, the shell 11 may have various shapes and sizes, such as, but not limited to, a rectangular parallelepiped shape, a cylindrical shape, or a hexagonal prism shape. The shape of the shell 11 may be determined based on the specific shape and size of the electrode assembly 30.

Optionally, the material of the shell 11 may be, but is not limited to, copper, iron, aluminum, stainless steel, aluminum alloy, or plastic.

The end cap 12 is a component that covers the opening 111 of the shell 11 to isolate the internal environment of the battery cell 7 from the external environment, and the shape of the end cap 12 may be adapted to the shape of the shell 11 to cooperate with the shell 11.

Optionally, the end cap 12 may be made of a material with a certain hardness and strength, such as, but not limited to, copper, iron, aluminum, stainless steel, aluminum alloy, or plastic. In this way, the end cap 12 is less likely to deform when subjected to squeezing or collision, enabling the battery cell 7 to have higher structural strength and improved reliability. For example, the end cap 12 and the shell 11 may be made of the same material to simplify the manufacturing process and facilitate cost reduction.

For example, the end cap 12 may be provided with functional components such as electrode terminals, the electrode terminals being capable of electrical connection with the electrode assembly 30 for outputting or inputting electrical energy of the battery cell 7.

For example, the end cap 12 may also be provided with a pressure relief mechanism for releasing internal pressure when the internal pressure or temperature of the battery cell 7 reaches a threshold.

For example, an insulating component may also be provided on the inner side of the end cap 12, the insulating component being capable of isolating the electrical connection components within the shell 11 from the end cap 12 to reduce the risk of short circuits. Optionally, the insulating component may be plastic, rubber, or the like.

Illustratively, the end cap 12 is connected to the shell 11 by welding, forming a first connecting portion at the connection between the end cap 12 and the shell 11. The first protective layer 20 covers the surface of the first welded portion 13 to isolate the first welded portion 13 from the external environment, thereby blocking moisture and reducing the risk of corrosion of the first welded portion 13. Additionally, the first protective layer 20 itself has a certain hardness, which can reduce the risk of scratches or impacts on the first welded portion 13.

Optionally, the first welded portion 13 may be located inside the housing 10, which is conducive to improving the aesthetic appearance of the battery cell 7; and the first welded portion 13 may also be located outside the housing 10, facilitating welding operations and reducing welding difficulty. For example, when the first welded portion 13 is located inside the housing 10, the end cap 12 may be provided with a welding hole, the welding hole penetrating the end cap 12 along the thickness direction of the end cap 12, and after the end cap 12 covers the opening 111 of the shell 11, a welding gun can weld the end cap 12 and the shell 11 inside the housing 10 through the welding hole; and when the first welded portion 13 is located outside the housing 10, the welding gun directly welds the end cap 12 and the shell 11 outside the housing 10.

Optionally, the first welded portion 13 may be located inside the housing 10, which is conducive to improving the aesthetic appearance of the battery cell 7; and the first welded portion 13 may also be located outside the housing 10, facilitating welding operations and reducing welding difficulty. For example, when the first welded portion 13 is located inside the housing 10, the end cap 12 may be provided with a welding hole, the welding hole penetrating the end cap 12 along the thickness direction of the end cap 12, and after the end cap 12 covers the opening 111 of the shell 11, a welding gun can weld the end cap 12 and the shell 11 inside the housing 10 through the welding hole; and when the first welded portion 13 is located outside the housing 10, the welding gun directly welds the end cap 12 and the shell 11 outside the housing 10.

Optionally, the first protective layer 20 may be directly connected to the first welded portion 13 or may be restricted to the first welded portion 13 through other components. For example, the connection method between the first protective layer 20 and the first welded portion 13 may be, but is not limited to, adhesion, riveting, or bolting.

Optionally, the material of the first protective layer 20 may be, but is not limited to, metal, or non-metal materials. For example, the metal material may be copper, aluminum, or stainless steel, and the non-metal material may be acrylate, polyurethane, epoxy resin, polyethylene, polypropylene, or polyvinyl chloride.

The above technical solution, by providing the first protective layer 20, with the first protective layer 20 covering the surface of the first welded portion 13, reduces the risk of corrosion or damage to the first welded portion 13, thereby effectively improving the reliability of the battery cell 7.

In some optional embodiments, the battery cell 7 may be, but is not limited to, a cylindrical battery cell 7, or a prismatic battery cell 7.

In some embodiments, the first protective layer 20 includes a first connecting section 21, a main section 22, and a second connecting section 23 connected to each other, the main section 22 being located between the first connecting section 21 and the second connecting section 23. The first connecting section 21 is connected to the shell 11, the second connecting section 23 is connected to the end cap 12, and the main section 22 covers the surface of the first welded portion 13.

Illustratively, the first connecting section 21 extends from the main section 22 in a direction toward the shell 11 and is connected to the shell 11, and the second connecting section 23 extends from the main section 22 in a direction toward the end cap 12 and is connected to the end cap 12. This can further improve the coverage effect of the first protective layer 20 on the first welded portion 13, reducing the risk of coverage blind spots. The first connecting portion and the second connecting portion can also enhance the connection strength of the first protective layer 20, reducing the risk of detachment of the first protective layer 20.

Optionally, the first connecting section 21 may be directly connected to the shell 11 or may be restricted to the shell 11 through other components. For example, the connection method between the first connecting section 21 and the shell 11 may be, but is not limited to, adhesion, riveting, or bolting.

Optionally, the second connecting section 23 may be directly connected to the end cap 12 or may be restricted to the end cap 12 through other components. For example, the connection method between the second connecting section 23 and the end cap 12 may be, but is not limited to, adhesion, riveting, or bolting.

In some embodiments, the battery cell 7 further includes an electrode assembly 30, the electrode assembly 30 being accommodated in the housing 10. The shell 11 includes a sidewall 112 surrounding the electrode assembly 30, the first connecting section 21 is connected to a side of the sidewall 112 facing away from the electrode assembly 30, and the second connecting section 23 is connected to a side of the end cap 12 facing away from the electrode assembly 30.

The electrode assembly 30 is a component in the battery cell 7 where electrochemical reactions occur. One or more electrode assemblies 30 may be included in the housing 10. The electrode assembly 30 is mainly formed by winding or stacking a positive electrode plate and a negative electrode plate, with a separator typically provided between the positive electrode plate and the negative electrode plate. The portions of the positive electrode plate and the negative electrode plate with active materials constitute the main body of the electrode assembly 30, and the portions of the positive electrode plate and the negative electrode plate without active materials each constitute a tab. The positive tab and the negative tab may be located together at one end of the main body or respectively at both ends of the main body. During the charging and discharging process of the battery, the positive electrode active material and the negative electrode active material react with the electrolyte, and the tabs are connected to electrode terminals to form a current loop.

Illustratively, the first welded portion 13 is located outside the housing 10, the first connecting section 21 extends from the main section 22 in a direction toward the shell 11 and is connected to the side of the sidewall 112 facing away from the electrode assembly 30, and the second connecting section 23 extends from the main section 22 in a direction toward the end cap 12 and is connected to the side of the end cap 12 facing away from the electrode assembly 30. Welding the end cap 12 to the shell 11 and providing the first protective layer 20 from the exterior of the housing 10 is convenient to operate and has low difficulty, which is conducive to reducing costs.

In some embodiments, the battery cell 7 further includes an insulating member 40, the insulating member 40 being connected to the side of the sidewall 112 facing away from the electrode assembly 30.

Illustratively, the insulating member 40 can provide insulation for the housing 10, reducing the risk of a short circuit between the battery cell 7 and external electrical connection components, thereby improving the reliability of the battery cell 7.

Optionally, the insulating member 40 may be directly connected to the sidewall 112 or may be restricted to the sidewall 112 through other components. For example, the connection method between the insulating member 40 and the sidewall 112 may be, but is not limited to, adhesion, riveting, or bolting.

Optionally, the insulating member 40 may be, but is not limited to, a film structure, a sheet structure, or a block structure.

Optionally, the material of the insulating member 40 may be, but is not limited to, polypropylene, polyethylene, or polybutene. The insulating member 40 may also include flame retardants, antioxidants, or the like, to improve the performance of the insulating member 40.

In some embodiments, the first connecting section 21 is spaced apart from the insulating member 40.

Illustratively, along the direction of the plane where the sidewall 112 is located, there is a certain distance between the first connecting portion and the insulating member 40. In other words, the first protective layer 20 and the insulating member 40 are independent and not connected to each other. This arrangement results in a simple structural design and low manufacturing difficulty, which is conducive to reducing costs and improving product yield.

In some embodiments, a side edge of the first connecting section 21, along an extension direction thereof away from the main section 22, is connected to the insulating member 40.

Illustratively, the first connecting section 21 is spliced with the insulating member 40. In other words, the first connecting section 21 and the insulating member 40 together cover the outer surface of the sidewall 112 along the thickness direction of the sidewall 112. Both the first connecting section 21 and the insulating member 40 provide a protective effect on the shell 11, improving the reliability of the shell 11. This can effectively improve the consistency of the outer surface of the housing 10, thereby facilitating an improvement in the aesthetic appearance of the battery cell 7.

In some embodiments, along the thickness direction of the sidewall 112, a side surface of the first connecting section 21 facing away from the sidewall 112 is flush with a side surface of the insulating member 40 facing away from the sidewall 112.

Illustratively, the side surface of the first connecting section 21 facing away from the sidewall 112 and the side surface of the insulating member 40 facing away from the sidewall 112 are located in the same plane, which can effectively improve the flatness of the outer surface of the housing 10, thereby further enhancing the aesthetic appearance of the battery cell 7.

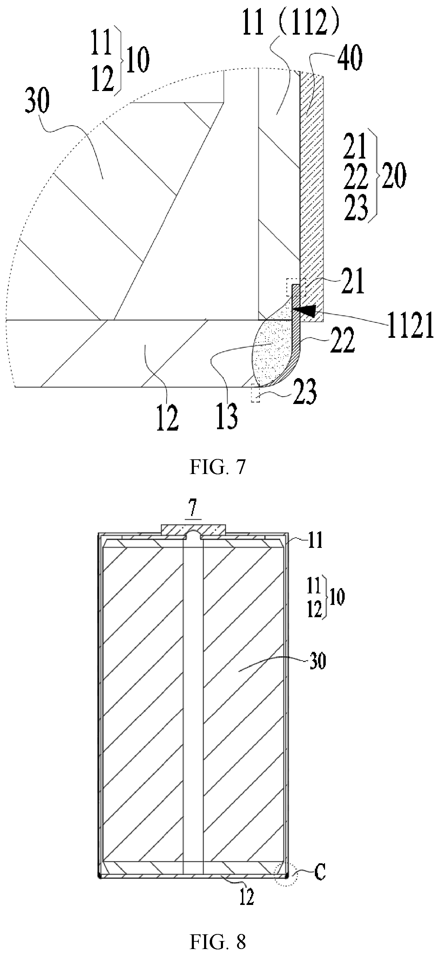

FIG. 6 is a schematic sectional structural diagram of another battery cell 7 provided by some embodiments of the present application, FIG. 7 is a schematic enlarged structural diagram of portion B in FIG. 6, and FIG. 8 is a schematic enlarged structural diagram of the end cap 12 and the shell 11 before welding at portion B in FIG. 6.

Still referring to FIG. 6 to FIG. 8, in some embodiments, along the thickness direction of the sidewall 112, the first connecting section 21 at least partially overlaps with the insulating member 40.

Illustratively, the first connecting section 21 and the insulating member 40 together cover the outer surface of the sidewall 112 along the thickness direction of the sidewall 112, and there is an overlap between the first connecting section 21 and the insulating member 40, which can further improve the coverage effect of the first connecting section 21 and the insulating member 40 on the sidewall 112, reducing the risk of coverage blind spots, thereby further enhancing the protective effect of the first connecting section 21 and the insulating member 40 on the shell 11, which is conducive to improving the reliability of the shell 11.

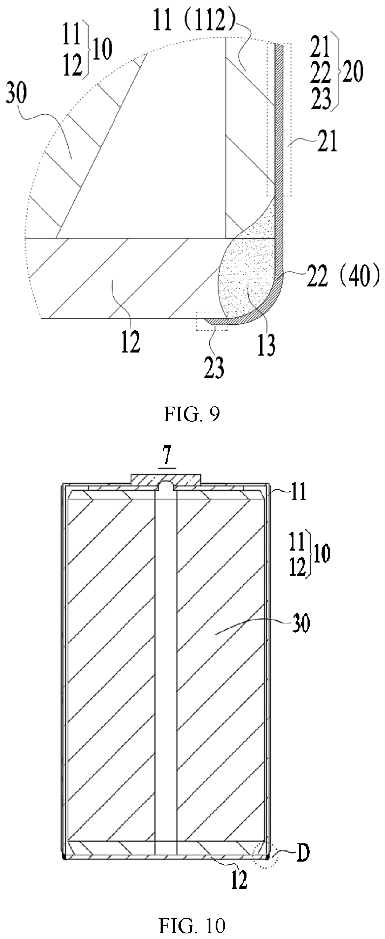

FIG. 8 is a schematic sectional structural diagram of still another battery cell provided by some embodiments of the present application, and FIG. 9 is a schematic enlarged structural diagram of portion C in FIG. 8.

Still referring to FIG. 8 and FIG. 9, in some embodiments, the first protective layer 20 and the insulating member 40 are an integrally formed structure.

Illustratively, this may be achieved by providing a structure with insulating properties in the first protective layer 20, or by configuring the first protective layer 20 as a double-layer structure, where one layer is a protective layer for the first welded portion 13, and the other layer is an insulating layer.

Thus, there is no need to connect the first protective layer 20 and the insulating member 40 through an additional connection process, simplifying the manufacturing process. Meanwhile, compared to connecting the first protective layer 20 and the insulating member 40 through an additional connection process, the integrally formed first protective layer 20 and insulating member 40 have higher connection strength.

Still referring to FIG. 6 and FIG. 7, in some embodiments, the sidewall 112 is provided with a recess 1121, the recess 1121 being recessed relative to an outer surface of the sidewall 112. A bottom wall of the recess 1121 is welded to the end cap 12 to form the first welded portion 13, and at least a portion of the first connecting section 21 is accommodated in the recess 1121.

Illustratively, the recess 1121 may be formed by recessing the outer surface of the sidewall 112 along the thickness direction of the sidewall 112. After the end cap 12 is welded to the bottom wall of the recess 1121, the recess 1121 can provide accommodation space, allowing the first welded portion 13 to be accommodated in the recess 1121, and after the first connecting section 21 covers the first welded portion 13, at least a portion of the first connecting section 21 is accommodated in the recess 1121, which can reduce the size of the first welded portion 13 and the first connecting section 21 protruding from the housing 10, thereby reducing the overall volume of the battery cell 7, which is conducive to increasing the energy density of the battery cell 7.

Optionally, the first connecting section 21 may be partially accommodated in the recess 1121, or the first connecting section 21 may be entirely accommodated in the recess 1121.

Optionally, the recess 1121 and the sidewall 112 may be an integrally formed structure, which can simplify the manufacturing process and facilitate cost reduction.

In some embodiments, along the thickness direction of the sidewall 112, a side surface of the first connecting section 21 facing away from the electrode assembly 30 is flush with a side surface of the sidewall 112 facing away from the electrode assembly 30, which can improve the flatness of the outer surface of the sidewall 112, optimizing the appearance of the product.

In some embodiments, along the thickness direction of the end cap 12, a side surface of the second connecting section 23 facing away from the electrode assembly 30 is flush with a side surface of the end cap 12 facing away from the electrode assembly 30.

Illustratively, the recess 1121 can provide accommodation space. During the welding process of the end cap 12 to the bottom wall of the recess 1121, the material at the connection between the end cap 12 and the bottom wall of the recess 1121 melts first, and the molten fluid flows toward the recess 1121. After the molten fluid solidifies to form the first welded portion 13, there is a certain distance between the first welded portion 13 and the side surface of the end cap 12 facing away from the electrode assembly 30.

Thus, the above technical solution, by covering the first protective layer 20 over the first welded portion 13 and making the side surface of the second connecting section 23 facing away from the electrode assembly 30 flush with the side surface of the end cap 12 facing away from the electrode assembly 30, can improve the flatness of the outer surface of the end cap 12, thereby further optimizing the appearance of the product.

In some embodiments, a minimum distance L1 between the side edge of the first connecting section 21, along the extension direction thereof away from the main section 22, and the first welded portion 13 satisfies a relationship: L1 ≥ 0.05 mm.

Illustratively, the minimum distance between the side edge of the first connecting section 21 along the extension direction thereof away from the main section 22 and the first welded portion 13 may be understood as the size of the outer edge of the first connecting section 21 extending beyond the edge of the first welded portion 13.

For example, the minimum distance L1 may be, but is not limited to, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

The above technical solution, by setting the minimum distance L1 between the side edge of the first connecting section 21, along the extension direction thereof away from the main section 22, and the first welded portion 13 within the above range, can further improve the coverage effect of the first protective layer 20 on the first welded portion 13, reducing the risk of coverage blind spots, thereby further improving the reliability of the battery cell 7.

Further, the minimum distance L1 between the side edge of the first connecting section 21, along the extension direction thereof away from the main section 22, and the first welded portion 13 satisfies a relationship: L1 ≥ 0.1 mm, to further reduce the risk of coverage blind spots.

For example, the minimum distance L1 may be, but is not limited to, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

In some embodiments, a minimum distance L2 between a side edge of the second connecting section 23, along an extension direction thereof away from the main section 22, and the first welded portion 13 satisfies a relationship: L2 ≥ 0.05 mm.

Illustratively, the minimum distance between the side edge of the second connecting section 23. along an extension direction thereof away from the main section 22, and the first welded portion 13 may be understood as a size of the outer edge of the second connecting section 23 extending beyond the edge of the first welded portion 13.

For example, the minimum distance L2 may be, but is not limited to, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

The above technical solution, by setting the minimum distance L2 between the side edge of the second connecting section 23, along the extension direction thereof away from the main section 22, and the first welded portion 13 within the above range, can further improve the coverage effect of the first protective layer 20 on the first welded portion 13, reducing the risk of coverage blind spots, thereby further improving the reliability of the battery cell 7.

Further, the minimum distance L2 between the side edge of the second connecting section 23, along an extension direction thereof away from the main section 22, and the first welded portion 13 satisfies the relationship: L2 ≥ 0.1 mm, to further reduce the risk of coverage blind spots.

For example, the minimum distance L2 may be, but is not limited to, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

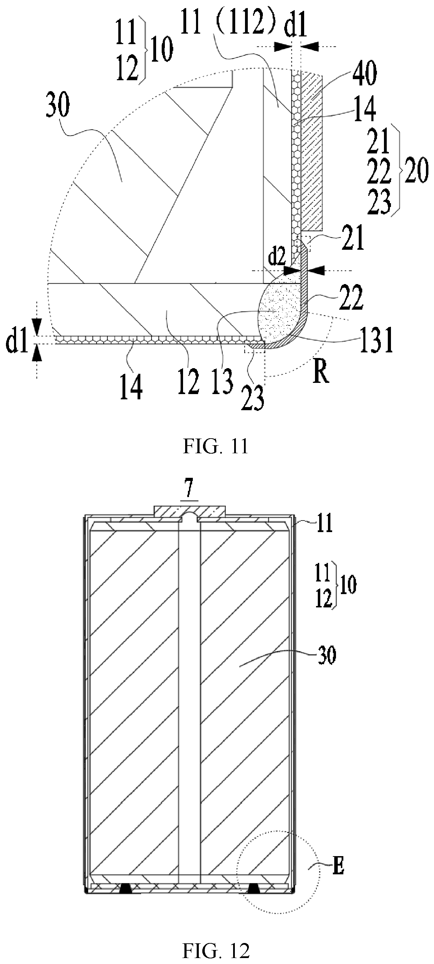

FIG. 10 is a schematic sectional structural diagram of yet still another battery cell provided by some embodiments of the present application, and FIG. 11 is a schematic enlarged structural diagram of portion D in FIG. 10.

Still referring to FIG. 10 and FIG. 11, in some embodiments, the housing 10 is provided with a coating 14, the coating 14 surrounds the first welded portion 13, and the first protective layer 20 is connected to the coating 14.

Illustratively, the first protective layer 20 is connected to the coating 14, which may mean that the outer edge of the first protective layer 20 is connected to the edge of the coating 14. In other words, the first protective layer 20 is spliced with the coating 14; alternatively, it may mean that the first protective layer 20 is stacked with the coating 14, and the first protective layer 20 is connected to the outer surface of the coating 14. In other words, the first protective layer 20 is connected to the side surface of the coating 14 facing away from the electrode assembly 30.

Optionally, the coating 14 may be provided on the end cap 12, with the coating 14 covering the surface of the end cap 12; or the coating 14 may be provided on the shell 11, with the coating 14 covering the surface of the shell 11; or the coating 14 may be provided on both the end cap 12 and the shell 11, with the coating 14 covering the entire surface of the housing 10.

Optionally, the coating 14 may be directly connected to the housing 10 or may be restricted to the housing 10 through other components. For example, the connection method between the coating 14 and the housing 10 may be, but is not limited to, adhesion, riveting, or bolting.

Optionally, the material of the coating 14 may be, but is not limited to metal or non-metal materials. For example, the metal material may be nickel, copper, aluminum, or stainless steel. The non-metal material may be acrylate, polyurethane, epoxy resin, polyethylene, polypropylene, polyvinyl chloride, or the like.

The above technical solution, by providing the coating 14 on the housing 10, enables the coating 14 to protect the surface of the housing 10, thereby further improving the overall reliability of the housing 10.

In some embodiments, a thickness d1 of the coating 14 satisfies a relationship: 0.1 µm ≤ d1 ≤ 10 µm.

Illustratively, the thickness d1 of the coating 14 may be, but is not limited to, 0.1 µm, 0.2 µm, 0.3 µm, 0.4 µm, 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, 4.2 µm, 4.5 µm, 4.8 µm, 5 µm, 6 µm, 7 µm, 8 µm, 9 µm, or 10 µm.

By setting the thickness d1 of the coating 14 within the above range, it is possible to improve the overall reliability of the housing 10 while minimizing the impact of the coating 14 on the overall size of the battery cell 7.

Further, the thickness d1 of the coating 14 satisfies a relationship: 0.5 µm ≤ d1 ≤ 5 µm, to further balance the overall reliability of the housing 10 and the overall size of the battery cell 7.

Illustratively, the thickness d1 of the coating 14 may be, but is not limited to, 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, 4.2 µm, 4.5 µm, 4.8 µm, or 5 µm.

In some embodiments, the first welded portion 13 includes a transition surface 131, the transition surface 131 connecting an outer surface of the shell 11 and an outer surface of the end cap 12.

The transition surface 131 refers to at least a portion of the surface of the first welded portion 13 that connects the outer surface of the shell 11 and the outer surface of the end cap 12. By providing the transition surface 131, a smooth transition can be achieved between the surface of the first welded portion 13 and the outer surface of the shell 11, as well as between the surface of the first welded portion 13 and the outer surface of the end cap 12. This can reduce the difficulty of applying the first protective layer 20 and improve the overall flatness of the outer appearance of the battery cell 7, which is conducive to improving the quality of the battery cell 7.

In some embodiments, the transition surface 131 is an arcuate surface.

It can be understood that, during the welding process of the end cap 12 to the shell 11, compared to a flat surface of the first welded portion 13, an arcuate surface of the first welded portion 13 has a lower welding difficulty. However, an arcuate surface has greater tension than a flat surface, making the arrangement of the first protective layer 20 more difficult. Thus, by increasing the arc radius of the arcuate surface, the surface tension of the arcuate surface can be correspondingly reduced, thereby further reducing the difficulty of applying the first protective layer 20.

In some embodiments, an arc radius R of the arcuate surface satisfies a relationship: R ≥ 100 µm.

For example, the arc radius R of the arcuate surface may be, but is not limited to, 100 µm, 150 µm, 200 µm, 250 µm, 300 µm, 350 µm, 400 µm, 450 µm, 500 µm, 550 µm, 600 µm, 750 µm, 800 µm, 850 µm, 900 µm, 950 µm, or 1000 µm.

The above technical solution, by setting the arc radius R of the arcuate surface to satisfy the above relationship, can further reduce the difficulty of preparing the first protective layer 20 and improve product yield.

Further, the arc radius R of the arcuate surface satisfies a relationship: R ≥ 200 µm.

For example, the arc radius R of the arcuate surface may be, but is not limited to, 200 µm, 250 µm, 300 µm, 350 µm, 400 µm, 450 µm, 500 µm, 550 µm, 600 µm, 750 µm, 800 µm, 850 µm, 900 µm, 950 µm, or 1000 µm.

In some embodiments, a thickness d2 of the first protective layer 20 satisfies a relationship: d2 ≥ 5 µm.

Illustratively, the thickness d2 of the first protective layer 20 may be, but is not limited to, 5 µm, 6 µm, 7 µm, 8 µm, 9 µm, 10 µm, 15 µm, 20 µm, 25 µm, 30 µm, 35 µm, 40 µm, 45 µm, 50 µm, 55 µm, 60 µm, 65 µm, or 70 µm.

The above technical solution, by setting the thickness d2 of the first protective layer 20 to satisfy the above relationship, can further improve the protective effect of the first protective layer 20 on the first welded portion 13.

Further, the thickness d2 of the first protective layer 20 satisfies a relationship: d2 ≥ 10 µm.

Illustratively, the thickness d2 of the first protective layer 20 may be, but is not limited to, 10 µm, 15 µm, 20 µm, 25 µm, 30 µm, 35 µm, 40 µm, 45 µm, 50 µm, 55 µm, 60 µm, 65 µm, or 70 µm.

Illustratively, the thickness of the first protective layer 20 may be detected by a grayscale value calibration method. A threshold grayscale value may be set for the lower limit of the thickness of the first protective layer 20. If the grayscale value is higher than the threshold, it may be determined that the thickness of the first protective layer 20 is insufficient. If the grayscale value is lower than the threshold, it may be determined that the thickness of the first protective layer 20 meets the standard.

In some embodiments, the first protective layer 20 is a transparent structure.

Illustratively, the first protective layer 20 may be made of a transparent material, which can further optimize the appearance of the product.

In some embodiments, the first protective layer 20 includes a fluorescent component.

Illustratively, by providing a fluorescent component, the thickness of the first protective layer 20 may be detected by a fluorescence value calibration method. A threshold fluorescence value may be set for the lower limit of the thickness of the first protective layer 20. If the fluorescence value is higher than the threshold, it may be determined that the thickness of the first protective layer 20 is insufficient. If the fluorescence value is lower than the threshold, it may be determined that the thickness of the first protective layer 20 meets the standard, which can further improve the accuracy of detecting the thickness of the first protective layer 20.

In some embodiments, the first protective layer 20 includes a coating material, the coating material including polyacrylate, polyurethane, or epoxy resin.

Illustratively, using a coating material applied through a coating process to form the first protective layer 20 on the first welded portion 13 is a simple process, which is conducive to reducing the difficulty of preparing the first protective layer 20 and lowering costs. Optionally, the coating process may be, but is not limited to, spraying, printing, or dispensing.

In some embodiments, a viscosity η of the coating material satisfies a relationship: 1 cps ≤ η ≤ 2000 cps.

Illustratively, the viscosity η of the coating material may be, but is not limited to, 1 cps, 50 cps, 100 cps, 150 cps, 200 cps, 250 cps, 300 cps, 350 cps, 400 cps, 450 cps, 500 cps, 550 cps, 600 cps, 650 cps, 700 cps, 750 cps, 800 cps, 850 cps, 900 cps, 950 cps, 1000 cps, 1200 cps, 1400 cps, 1600 cps, 1800 cps, or 2000 cps.

The viscosity of the coating material may be measured using a rotational viscometer in accordance with the national standard GB/T 24148.4-2009, and the specific measurement method may refer to the national standard GB/T 24148.4-2009, which will not be repeated here.

The above technical solution, by setting the viscosity η of the coating material within the above range, can effectively improve the coating quality and product yield.

Further, the viscosity η of the coating material satisfies a relationship: 1 cps ≤ η ≤ 1000 cps, to further improve coating quality and product yield.

Illustratively, the viscosity η of the coating material may be, but is not limited to, 1 cps, 50 cps, 100 cps, 150 cps, 200 cps, 250 cps, 300 cps, 350 cps, 400 cps, 450 cps, 500 cps, 550 cps, 600 cps, 650 cps, 700 cps, 750 cps, 800 cps, 850 cps, 900 cps, 950 cps, or 1000 cps.

In some embodiments, an adhesion between the first protective layer 20 and the first welded portion 13 ranges from level 0 to level 1.

Illustratively, adhesion refers to the firmness with which a coating is bonded to the surface of the coated object through physical and chemical forces, and the above adhesion levels are tested using the international standard ISO 2409 cross-cut test standard.

By setting the adhesion between the first protective layer 20 and the first welded portion 13 to satisfy the above relationship, the reliability of the connection between the first protective layer 20 and the first welded portion 13 can be further improved, reducing the risk of detachment of the first protective layer 20.

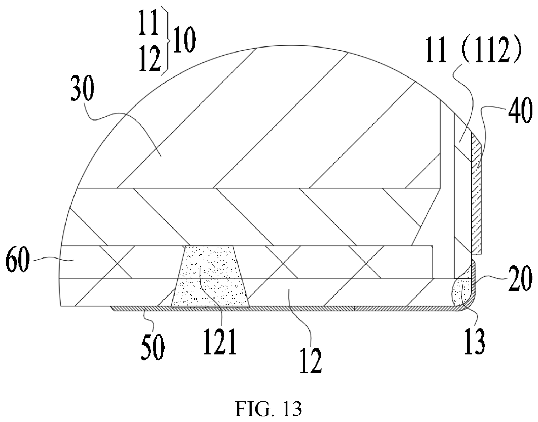

FIG. 12 is a schematic sectional structural diagram of a further battery cell provided by some embodiments of the present application, and FIG. 13 is a schematic enlarged structural diagram of portion E in FIG. 12.

Still referring to FIG. 12 and FIG. 13, in some embodiments, the end cap 12 is further provided with a second welded portion 121, the second welded portion 121 being electrically connected to the electrode assembly 30 of the battery cell 7. The battery cell 7 further includes a second protective layer 50, the second protective layer 50 covering a surface of the second welded portion 121.

Illustratively, the electrode assembly 30 includes a main body and tabs, and the electrode assembly 30 achieves connection with external electrical devices through the electrical connection between the tabs and the end cap 12. The end cap 12 and the electrode assembly 30 may be electrically connected by welding, and thus the end cap 12 is welded to the electrode assembly 30 to form the second welded portion 121 on the end cap 12.

As described above, the second protective layer 50 covers the surface of the second welded portion 121. In other words, the second protective layer 50 covers the second welded portion 121 from the outer side of the end cap 12 to isolate the second welded portion 121 from the external environment, thereby blocking moisture and reducing the risk of corrosion of the second welded portion 121. Additionally, the second protective layer 50 itself has a certain hardness, which can reduce the risk of scratches or impacts on the second welded portion 121, thereby further improving the reliability of the battery cell 7.

In some embodiments, the first protective layer 20 and the second protective layer 50 are an integrally formed structure. There is no need to connect the first protective layer 20 and the second protective layer 50 through an additional connection process, simplifying the manufacturing process. Meanwhile, compared to connecting the first protective layer 20 and the second protective layer 50 through an additional connection process, the integrally formed first protective layer 20 and second protective layer 50 have higher connection strength.

In some embodiments, the battery cell 7 further includes a current collector 60, the current collector 60 being connected between the end cap 12 and the electrode assembly 30, and the current collector 60 being welded to the second welded portion 121.

Illustratively, the current collector 60 is disposed between the electrode assembly 30 and the end cap 12, and the end cap 12, the current collector 60, and the electrode assembly 30 are connected by welding to form the second welded portion 121, achieving electrical connection among the end cap 12, the current collector 60, and the electrode assembly 30. The current collector 60 can improve the stability of the electrical connection between the electrode assembly 30 and the end cap 12.

According to some embodiments of the present application, the present application further provides a battery including the battery cell 7 of any of the above solutions.

According to some embodiments of the present application, the present application further provides an electric apparatus including the battery cell 7 of any of the above solutions, the battery cell 7 being configured to provide electrical energy.

To better understand the battery cell 7 provided by the embodiments of the present application, based on the same inventive concept, an embodiment of the above battery cell 7 in practical application is provided below for illustration.

An embodiment of the present application provides a battery cell 7, where the battery cell 7 includes a housing 10, an electrode assembly 30, a first protective layer 20, and an insulating member 40, the electrode assembly 30 being accommodated in the housing 10. The housing 10 includes a shell 11 and an end cap 12, the shell 11 has an opening 111, the shell 11 includes a sidewall 112 surrounding the electrode assembly 30, and the sidewall 112 is provided with a recess 1121, the recess 1121 being recessed relative to an outer surface of the sidewall 112. The end cap 12 covers the opening 111, and the end cap 12 is welded to a bottom wall of the recess 1121 to form a first welded portion 13. The first protective layer 20 includes a first connecting section 21, a main section 22, and a second connecting section 23 connected to each other, the main section 22 being located between the first connecting section 21 and the second connecting section 23. The first connecting section 21 is connected to a side of the sidewall 112 facing away from the electrode assembly 30, the second connecting section 23 is connected to a side of the end cap 12 facing away from the electrode assembly 30, and the main section 22 covers the surface of the first welded portion 13. The insulating member 40 is connected to the side of the sidewall 112 facing away from the electrode assembly 30.

The first connecting section 21 is spaced apart from the insulating member 40, or a side edge of the first connecting section 21 along an extension direction thereof away from the main section 22 is connected to the insulating member 40, or along the thickness direction of the sidewall 112, the first connecting section 21 at least partially overlaps with the insulating member 40, or the first protective layer 20 and the insulating member 40 are an integrally formed structure.

The above technical solution, by providing the first protective layer 20, with the first protective layer 20 covering the surface of the first welded portion 13, reduces the risk of corrosion or damage to the first welded portion 13, thereby effectively improving the reliability of the battery cell 7.

It should be noted that, in the absence of conflict, the embodiments and features in the embodiments of the present application may be combined with each other.

Finally, it should be noted that the above embodiments are only used to illustrate the technical solutions of the present application and not to limit them. Although the present application has been described in detail with reference to the foregoing embodiments, those of ordinary skill in the art should understand that they may still modify the technical solutions described in the foregoing embodiments or equivalently replace some or all of the technical features. These modifications or replacements do not cause the essence of the corresponding technical solutions to depart from the scope of the technical solutions of the embodiments of the present application, and they should all be included within the scope of the claims and the specification of the present application. In particular, as long as there is no structural conflict, the various technical features mentioned in the embodiments can be combined in any manner. The present application is not limited to the specific embodiments disclosed herein but includes all technical solutions falling within the scope of the claims.

## Claims

1. A battery cell comprising:
a housing comprising a shell and an end cap, the shell having an opening, and the end cap covering the opening, wherein the end cap is welded to the shell to form a first welded portion; and
a first protective layer covering a surface of the first welded portion.

2. The battery cell according to claim 1, wherein the first protective layer comprises a first connecting section, a main section, and a second connecting section connected to each other, the main section being located between the first connecting section and the second connecting section; wherein
the first connecting section is connected to the shell, the second connecting section is connected to the end cap, and the main section covers the surface of the first welded portion.

3. The battery cell according to claim 2, wherein the battery cell further comprises an electrode assembly, the electrode assembly being accommodated in the housing;
wherein the shell comprises a sidewall surrounding the electrode assembly, the first connecting section is connected to a side of the sidewall facing away from the electrode assembly, and the second connecting section is connected to a side of the end cap facing away from the electrode assembly.

4. The battery cell according to claim 3, wherein the battery cell further comprises an insulating member, the insulating member being connected to the side of the sidewall facing away from the electrode assembly.

5. The battery cell according to claim 4, wherein the first connecting section is spaced apart from the insulating member.

6. The battery cell according to claim 4 or 5, wherein a side edge of the first connecting section, along an extension direction thereof away from the main section, is connected to the insulating member.

7. The battery cell according to claim 6, wherein, along a thickness direction of the sidewall, a side surface of the first connecting section facing away from the sidewall is flush with a side surface of the insulating member facing away from the sidewall.

8. The battery cell according to any one of claims 4 to 7, wherein, along the thickness direction of the sidewall, the first connecting section at least partially overlaps with the insulating member.

9. The battery cell according to any one of claims 4 to 8, wherein the first protective layer and the insulating member are an integrally formed structure.

10. The battery cell according to any one of claims 3 to 9, wherein the sidewall is provided with a recess, the recess being recessed relative to an outer surface of the sidewall; wherein
a bottom wall of the recess is welded to the end cap to form the first welded portion, and at least a portion of the first connecting section is accommodated in the recess.

11. The battery cell according to claim 10, wherein, along the thickness direction of the sidewall, a side surface of the first connecting section facing away from the electrode assembly is flush with a side surface of the sidewall facing away from the electrode assembly.

12. The battery cell according to claim 11, wherein, along a thickness direction of the end cap, a side surface of the second connecting section facing away from the electrode assembly is flush with a side surface of the end cap facing away from the electrode assembly.

13. The battery cell according to any one of claims 2 to 12, wherein a minimum distance L1 between the side edge of the first connecting section, along the extension direction thereof away from the main section, and the first welded portion satisfies a relationship: L1 ≥ 0.05 mm; wherein
a minimum distance L2 between a side edge of the second connecting section, along an extension direction thereof away from the main section, and the first welded portion satisfies a relationship: L2 ≥ 0.05 mm.

14. The battery cell according to claim 13, wherein the minimum distance L1 satisfies a relationship: L1 ≥ 0.1 mm, and the minimum distance L2 satisfies a relationship: L2 ≥ 0.1 mm.

15. The battery cell according to any one of claims 1 to 14, wherein the housing is provided with a coating, the coating surrounds the first welded portion, and the first protective layer is connected to the coating.

16. The battery cell according to claim 15, wherein a thickness d1 of the coating satisfies a relationship: 0.1 µm ≤ d1 ≤ 10 µm.

17. The battery cell according to claim 16, wherein the thickness d1 of the coating satisfies a relationship: 0.5 µm ≤ d1 ≤ 5 µm.

18. The battery cell according to any one of claims 1 to 17, wherein the first welded portion comprises a transition surface, the transition surface connecting an outer surface of the shell and an outer surface of the end cap.

19. The battery cell according to claim 18, wherein the transition surface is an arcuate surface.

20. The battery cell according to claim 19, wherein an arc radius R of the arcuate surface satisfies a relationship: R ≥ 100 µm.

21. The battery cell according to claim 20, wherein the arc radius R satisfies a relationship: R ≥ 200 µm.

22. The battery cell according to any one of claims 1 to 21, wherein a thickness d2 of the first protective layer satisfies a relationship: d2 ≥ 5 µm.

23. The battery cell according to claim 22, wherein the thickness d2 of the first protective layer satisfies a relationship: d2 ≥ 10 µm.

24. The battery cell according to any one of claims 1 to 23, wherein the first protective layer is a transparent structure.

25. The battery cell according to claim 24, wherein the first protective layer comprises a fluorescent component.

26. The battery cell according to any one of claims 1 to 25, wherein the first protective layer comprises a coating material, the coating material comprising polyacrylate, polyurethane, or epoxy resin.

27. The battery cell according to claim 26, wherein a viscosity η of the coating material satisfies a relationship: 1 cps ≤ η ≤ 2000 cps.

28. The battery cell according to claim 27, wherein the viscosity η of the coating material satisfies a relationship: 1 cps ≤ η ≤ 1000 cps.

29. The battery cell according to any one of claims 1 to 28, wherein an adhesion between the first protective layer and the first welded portion ranges from level 0 to level 1.

30. The battery cell according to any one of claims 1 to 29, wherein the end cap is further provided with a second welded portion, the second welded portion being electrically connected to an electrode assembly of the battery cell; wherein
the battery cell further comprises a second protective layer, the second protective layer covering a surface of the second welded portion.

31. The battery cell according to claim 30, wherein the first protective layer and the second protective layer are an integrally formed structure.

32. The battery cell according to any one of claims 1 to 31, wherein the battery cell is a cylindrical battery cell.

33. A battery comprising the battery cell according to any one of claims 1 to 32.

34. An electric apparatus comprising the battery cell according to any one of claims 1 to 32, the battery cell being configured to provide electrical energy.
